(19) Europäisches Patentamt
European Patent Office
Office européen des brevets

(11) **EP 3 789 610 A1**

(12) **EUROPEAN PATENT APPLICATION**

(43) Date of publication:
**10.03.2021 Bulletin 2021/10**

(51) Int Cl.:
**F03D 13/20** *(2016.01)*     **F03D 80/00** *(2016.01)*

(21) Application number: **19195917.0**

(22) Date of filing: **06.09.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Siemens Gamesa Renewable Energy A/S**
**7330 Brande (DK)**

(72) Inventor: **Thomsen, Jan**
**6200 Aabenraa (DK)**

(74) Representative: **Aspacher, Karl-Georg et al**
**Siemens Gamesa Renewable Energy GmbH & Co. KG**
**Otto-Hahn-Ring 6**
**81739 München (DE)**

(54) **SUPPORT STRUCTURE FOR A NACELLE OF A WIND TURBINE**

(57)    The present invention relates to a support structure (300) for a nacelle of a wind turbine, wherein the support structure (300) comprises a main foundation (305) and a rear frame comprising at least two rear end beams (301, 303) that are connected to the main foundation (305) at one end and extend from the main foundation (305), wherein the main foundation (305) and each of the at least two rear end beams (301, 303) are connected in a connection area (309, 313) by a single connection arrangement (307, 311), wherein the connection arrangement (307, 311) comprises at least one curved section, such that a load on the connection area (309, 313) is distributed within the connection arrangement (307, 311). The present invention further relates to a wind turbine and a method for connecting a rear frame to a main foundation in a support structure (300).

FIG 3

## Description

The present invention relates to a support structure for a nacelle of a wind turbine, a wind turbine and a method for connecting a rear frame to a main foundation in a support structure.

Wind turbines are exposed to high mechanical stress. In particular, components of a wind turbine such as a main foundation have to be adapted to transfer loads and forces from a main axle of a wind turbine to a yaw bearing of the wind turbine.

In general, a rear frame is attached to the main foundation to form a nacelle for housing inner components of a wind turbine. Thus, a solid connection between the main foundation and the rear frame is essential for a transfer of loads, forces and torques during operation of a wind turbine.

Document EP 2 494 198 B1 describes a connection of a rear frame and a main foundation that is based on two separate connection areas that are displaced from each other in a first direction towards side parts of a nacelle, in a second direction towards a front end, and in a third direction from top to bottom of the nacelle.

It is an object of the invention to provide a stable and reliable wind turbine. More specifically, it is an object to provide a wind turbine with a connection between a main foundation and a rear frame where transfer of torques and forces from the rear frame to the main foundation is facilitated.

This object is solved by the subject-matter of the claims. In particular, the object is solved by a support structure for a nacelle, a wind turbine and a method for connecting a rear frame to a main foundation in a nacelle according to the independent claims. Further details of the invention unfold from the other claims as well as the description and the drawings. Thereby, the features and details described in connection with the support structure apply in connection with the wind turbine and the method for connecting a rear frame to a main foundation in a nacelle, so that regarding the disclosure of the individual aspects of the invention it is or can be referred to one another.

According to a first aspect of the invention, the object is solved by a support structure for a nacelle of a wind turbine. The nacelle comprises a main foundation and a rear frame comprising at least two rear end beams that are connected to the main foundation at one end and extend from the main foundation. The main foundation and each of the at least two rear end beams are connected in a connection area by a single connection arrangement. The connection arrangement comprises at least one curved section, such that a load on the connection area is distributed within the connection arrangement.

The support structure according to the present invention is very stable and resistant with respect to loads, such as torques and forces that occur during operation of a wind turbine. This results from a connection arrangement that is used to connect a rear end beam and a main foundation of the support structure. Thus, for every rear end beam a corresponding connection area is used that connects the particular rear end beam with the main foundation.

In the context of the present invention, a connection area may be an area where a rear end beam and a main foundation are attached to each other. A connection area may be formed by an overlap of a rear end beam and a main foundation. A connection area my transfer loads, such as torques and forces from a rear end beam to a main foundation and vice versa.

In the context of the present invention, a load may be a momentum, a force, or a torque.

In the context of the present invention, a connection arrangement may be a pattern of connection elements, such as bolts, welds, cylindrical pins, rivets or a combination of these, which is arranged in a connection area. The connection arrangement according to the present invention comprises at least one curved section, such that a load on the connection area is distributed within the connection arrangement. Thus, the connection arrangement according to the present invention may have a contact face layout with circular or oval sections. Of course, the connection arrangement may be circular or oval in total.

By using a connection arrangement that comprises at least one curved section, a number of connection elements may be reduced since the loads that occur during operation of a wind turbine are transferred within the connection arrangement, such that particular sections or elements of the connection arrangement that face high mechanical stress are unloaded and other sections or elements of the connection arrangement are loaded. In other words, by using curved sections, a load on the connection arrangement is distributed, in particular uniformly distributed, among sections or elements of the connection arrangement, such that damage of the connection arrangement is avoided.

Since the connection arrangement according to the present invention provides for a stable and reliable connection between a rear end beam and main foundation, the number of connection elements or the size of the connection arrangement may be minimized with respect to prior art solutions where connection arrangements with straight rows of connections elements are used.

Further, the connection arrangement according to the present invention results in reduced maximum stress in a rear end beam and a main foundation, in particular in a region close to the connection arrangement, by increasing a friction capacity and a buckling resistance of a corresponding connection area.

Since according to the present invention only one single connection arrangement is used to connect a rear end beam and a main foundation, only this single connection arrangement has to be installed by a technician, which leads to an improved tolerance chain and a time and cost effective assembly of the present support structure.

Preferably, the single connection arrangement comprises a plurality of connection elements, wherein connection elements in a first section of the connection arrangement are located closer to each other than connections elements in a second section of the connection arrangement.

In the context of the present invention, a section may be an area in a connection arrangement, such as segment in a curved structure of the connection arrangement, for example.

By using different areas with connections elements arranged in different distances, the connection arrangement disclosed herein may be fitted to a load characteristic of a particular wind turbine. Thus, a first section with a small distance between particular connection elements may be arranged in close distance to an origin of a load and a second section with larger distance between particular connection elements may be arranged distant, i.e. in a larger distance as the first section, to the origin of the load. Such an arrangement enables a transfer of high loads in the region of the origin of the load to other connection elements and avoids extensive use of material in regions distant from the origin of the load.

Preferably, the connection arrangement extends in a longitudinal direction of the rear frame.

By using a connection arrangement that extends in a longitudinal direction of the rear frame, a longitudinal load on the rear frame may be distributed on connection elements of the connection arrangement in a uniform way, such that a punctual burden of particular connection elements with a high load is avoided.

Preferably, each of the rear end beams comprises one or more J-shaped layers.

By using J-shaped layers, a load transfer from horizontal areas to vertical areas and vice versa is improved compared to other shapes, such as a C-shape, for example.

Preferably, in case each of the rear end beams comprises at least two J-shaped layers, flanges that are to be loaded by compressive loads of the at least two J-shaped layers, at least partially, have larger cross section areas than flanges of the at least two J-shaped layers that are to be loaded by tension loads.

In particular, lower flanges of the at least two J-shaped layers, at least partially, may have larger cross section areas than upper flanges of the at least two J-shaped layers.

The at least two J-shaped layers may be connected at least in the connection area using the connection arrangement disclosed herein.

By using a plurality of profiles having different cross sections, the strength and stiffness can be improved by a limited amount of material.

Preferably, at least one reinforcement element is arranged in the connection area that covers at least one section of the connection arrangement.

By using a reinforcement element, such as a steel plate, in particular a steel plate that is part of a main foundation, a sandwich structure may be built by an inner layer, a reinforcement element, and an outer layer. In such an arrangement, the reinforcement element supports the inner and the outer layers and assists in distributing a load from the inner layer to the outer layer and vice versa, such that damage of the inner and outer layers is minimized or totally avoided.

Further, the reinforcement element may comprise drillings or receiving elements for connection elements of the connection arrangement. Thus, the reinforcement element may support the connection elements and protect them from cracking or any other sort of damage.

According to a second aspect, the present invention relates to a wind turbine with a support structure as described herein.

A wind turbine with a support structure according to the present invention is solid due to the connection arrangement, which distributes a load among connection elements of the connection arrangement. Further, a minimum of connection elements can be used for manufacturing the wind turbine by using the support structure as disclosed herewith, such that the wind turbine disclosed herein is light and easy to install.

According to a third aspect, the present invention relates to a method for connecting a rear frame to a main foundation in a support structure as described herein, wherein the rear frame comprises at least two rear end beams. The method comprising an alignment step for aligning each of the rear end beams with the main foundation in a connection area, and a connection step for connecting each of the rear end beams with the main foundation in the connection area by a single connection arrangement. The connection arrangement comprises at least one curved section, such that a load on the connection area is distributed within the connection arrangement.

The method disclosed herein enables a manufacturing of a wind turbine with a support structure according to the present invention that is solid due to the connection arrangement, which distributes a load among connection elements of the connection arrangement and that is light weighted. By using the method disclosed herein, a wind turbine is easy and cost effective to install. Thus, by using the method disclosed herein the same advantages and technical effects as the support structure and the wind turbine according to the present invention can be achieved.

Further advantages, features and details of the invention unfold from the following description, in which embodiments of the present invention are described in detail. Thereby, the features from the claims as well as the features mentioned in the description can be essential for the invention as taken alone or in an arbitrary combination. In the drawings, there is schematically shown:

FIG. 1     a support structure according to prior art,

FIG. 2     the support structure according to Fig. 1 in a side-view,

Fig. 3     a support structure according to an embodiment,

Fig. 4     the support structure of Fig. 3 in a side view,

Fig. 5     a rear beam according to an embodiment in a first view,

Fig. 6     a connection area as shown in Fig. 5, in more detail,

Fig. 7     the rear beam of Fig. 5 in a second view,

Fig. 8     the rear beam of Figs. 5 to 7 in a third view,

Fig. 9     a connection arrangement according to another embodiment,

Fig. 10    a connection arrangement according to yet another embodiment,

Fig. 11    a connection arrangement according to yet another embodiment.

Fig. 12    a wind turbine according to an embodiment, and

Fig. 13    a method according to an embodiment.

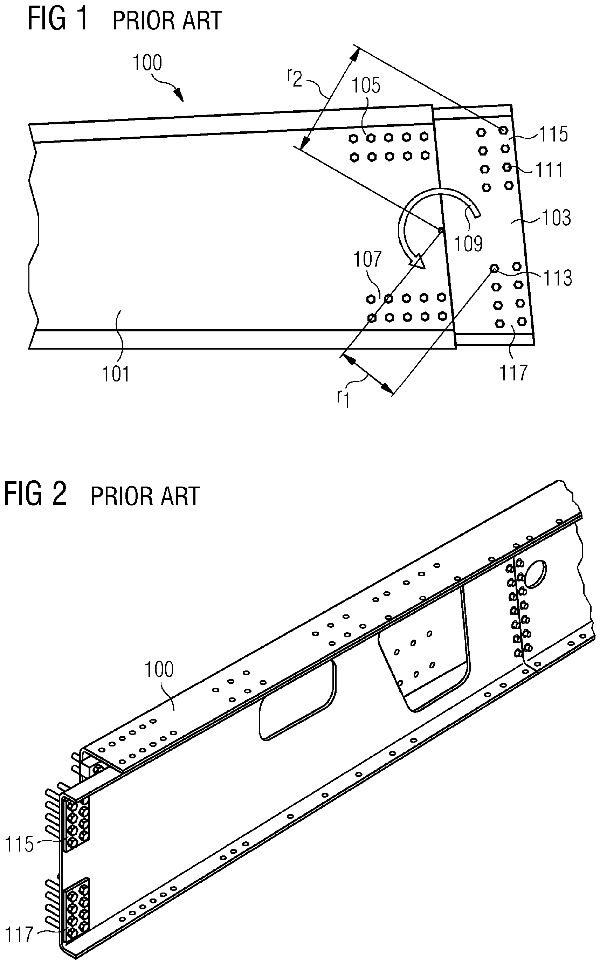

In Fig. 1, a rear beam 100 of a nacelle of a wind turbine is shown. The rear beam 100 comprises a first layer 101 and a second layer 103.

The first layer 101 and the second layer 103 are connected by a first connection face 105 that consists of two straight rows of bolts and a second connection face 107 that consists of two straight rows of bolts as well.

According to formula (1) a force F on a bolt will in general vary linear with a distance r from a centroid of all bolts to a particular bolt. A momentum M that is applied on the rear beam, as indicated by arrow 109, results in an outer bolt 111 being loaded with much more bolt force than an inner bolt 113.

$$F_2 = F_1 \bullet \frac{r_2}{r_1} \qquad (1)$$

Further, rear beam 100 comprises a third connection face 115 and a fourth connection face 117 for connecting with a main foundation. If a downward force is added to the beam 100, all bolts in connection face 115 will be loaded by a horizontal force going to the left and all bolts in connection face 117 will be loaded by a horizontal force going to the right. Additionally, on all bolts in connection faces 115 and 117 there will be a vertical force component going upwards.

The horizontal forces on bolts 115 will be transferred to horizontal forces in 117 by shear forces in the second layer 103.

Fig. 2 shows the rear beam 100 in a top view. From this view, it can be understood that, by separating the connection faces 115 and 117, a load can only be transferred from the third connection face 115 to the fourth connections face 117 by shear forces in a domain between connection faces 115 and 117.

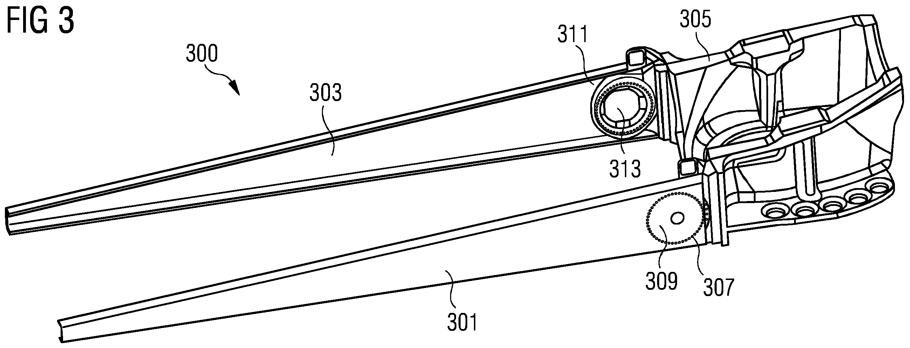

Fig. 3 shows a support structure 300 according to an embodiment. The support structure 300 comprises a first rear beam 301 a second rear beam 303 and a main foundation 305.

The first rear beam 301 and the main foundation 305 are connected by a first connection arrangement 307 in a first connection area 309.

The second rear beam 303 and the main foundation 305 are connected by a second connection arrangement 311 in a second connection area 313.

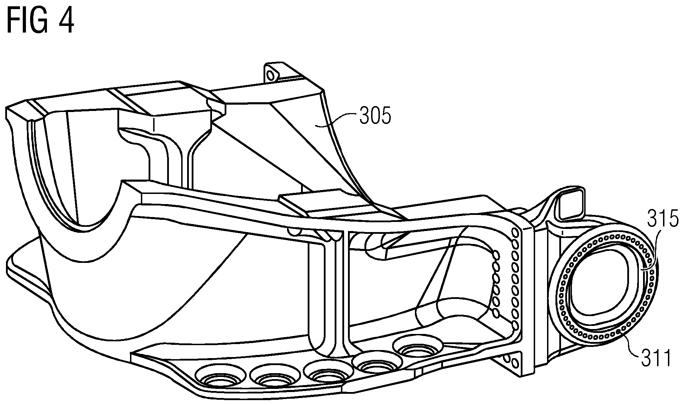

In Fig. 4, the support structure 300 is shown in a side view. Here, the main foundation 305 is shown in detail with an installation guide 315 for installation of the connection arrangement 311.

By using the installation guide 315, the connection arrangement 311 can be provided very fast and precise by a technician.

The installation guide 315 may be part of the main foundation 305.

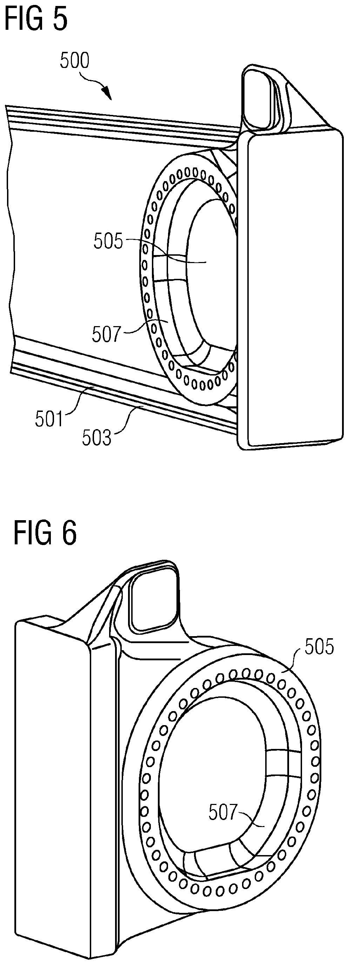

In Fig. 5, a rear beam 500 is shown. The rear beam 500 comprises a first layer 501, a second layer 503, and a connection area 505.

In the connection area 505, an installation guide 507 is located, in which bolts are inserted with a distance to each other that is predetermined by the installation guide 507.

In Fig. 6, the connection area 505 is shown in more detail. Here, it can be seen that the installation guide 507 is an elevated structure comprising bore holes for receiving bolts. The bore holes are arranged in a circular shape, such that each bore hole and a corresponding connection element inserted in the bore hole has the same distance to a center of an opening of the connection area 505. Alternatively, the bore holes may be arranged in any other at least partially curved shape.

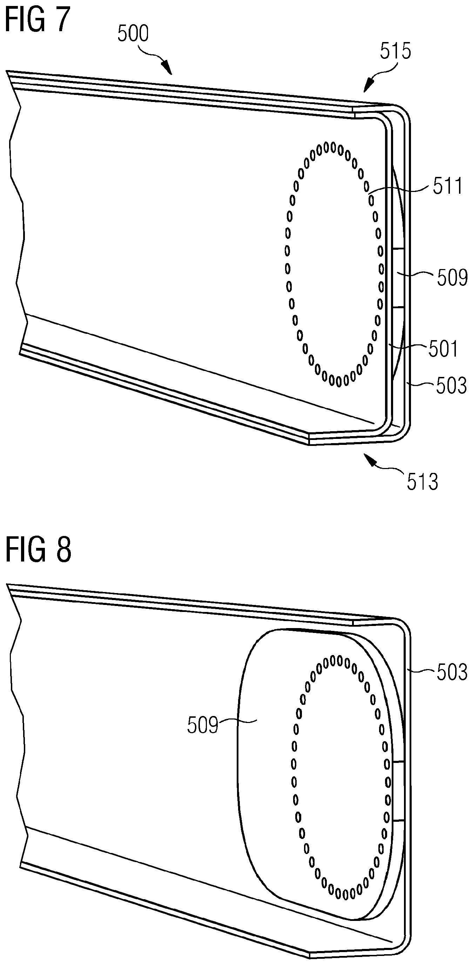

In Fig. 7 the rear beam 500 is shown on a cut view. Here, it can be seen that the rear beam 500 has a sandwich structure comprising the first layer 501, a reinforcement element 509, and the second layer 503, which are connected by bolts of a connection arrangement 511 that are inserted in the installation guide 507 as shown in Fig. 5.

The first layer 501 and the second layer 503 are J-shaped. The J-shaped structure of the first layer 501 and the second layer 503 enables a transfer of loads between horizontal areas and vertical areas of the rear beam 500.

Further, a lower flange 513 of the first layer 501 and the second layer 503, which is generally loaded by compressive loads, has a cross section that is larger than a cross section of an upper flange 515 of the first layer 501 and the second layer 503, which is generally loaded by tension loads.

Thus, the different cross sections of the upper and lower flanges provide for a very high capability for carrying buckling loads, which improves strength and stiffness of the rear beam 500 with a minimal amount of material.

In Fig. 8, the reinforcement element 509 is shown in detail. The reinforcement element 509 transfers bolt pretensions from the first layer 501 to the second layer 503 and vice versa.

Further, the reinforcement element 509 reinforces the rear beam in the connection area 505.

The reinforcement element 509 may be part of a main foundation.

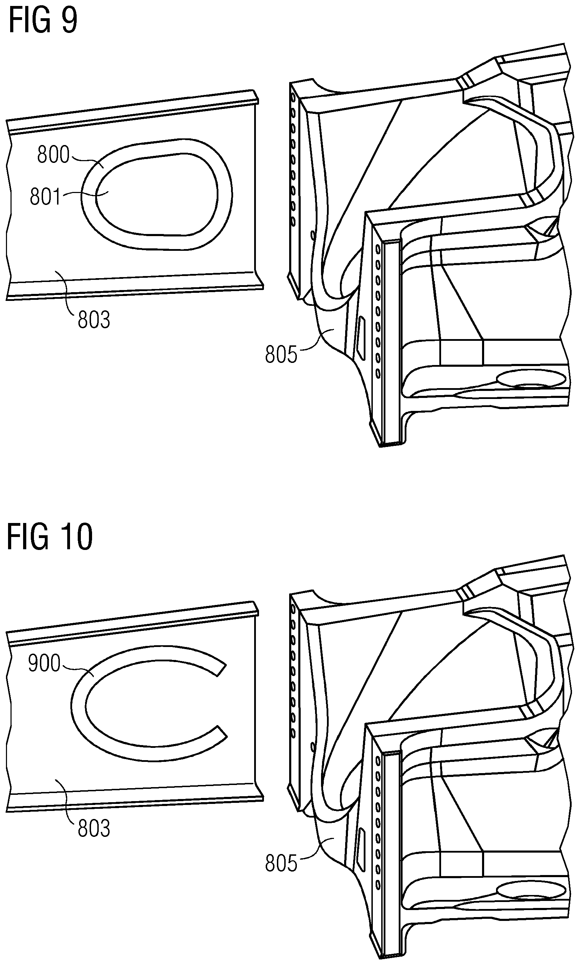

In Fig. 9 a connection arrangement 800 is shown. The connection arrangement 800 is built by an oval shaped weld placed in a connection area 801 on a first layer 803 and may be used to connect the first layer 803 with a main foundation 805.

In Fig. 10 a connection arrangement 900 is shown. The connection arrangement 900 is built by an oval shaped welding section placed in the connection area 801 on the first layer 803 and may be used to connect the first layer 803 with the main foundation 805 as shown in Fig 9.

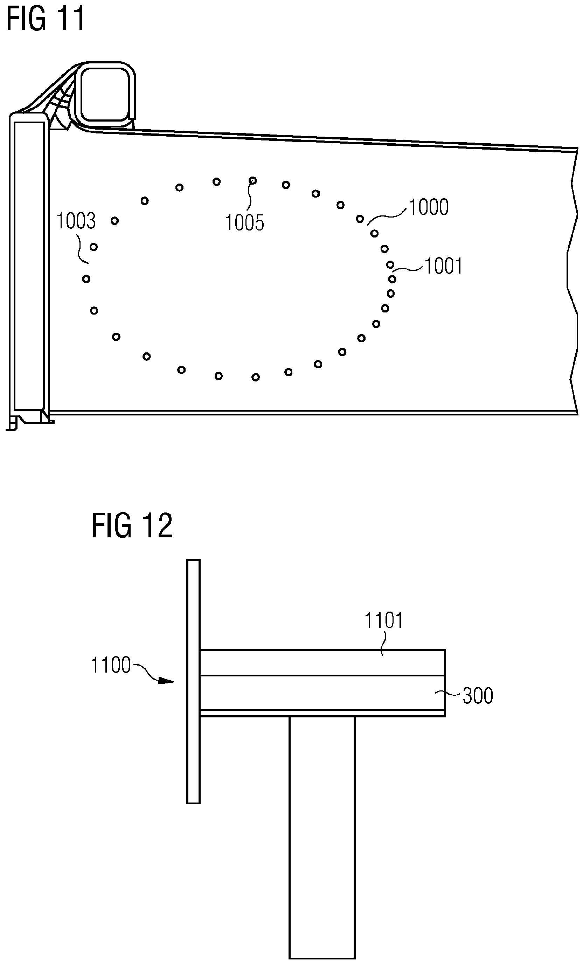

In Fig. 11 a connection arrangement 1000 is shown. The connection arrangement 1000 comprises a first section 1001, where connection elements 1005, such as bolts, forming the connection arrangement 1000 are arranged close to each other, i.e. arranged with a small distance between each other, to transfer a high load on a high number of bolts.

Further, the connection arrangement 1000 comprises a second section 1003, where bolts forming the connection arrangement 1000 are arranged in greater distance to each other than in the first section 1001. Since in the second section 1003 the loads are smaller than in the first section 1001, the number of bolts is reduced and the amount of material together with the weight of a corresponding support structure is minimized.

In Fig. 12, a wind turbine 1100 is shown. The wind turbine 1100 comprises a nacelle 1101 that comprises the support structure 300 as described with respect to Fig. 3.

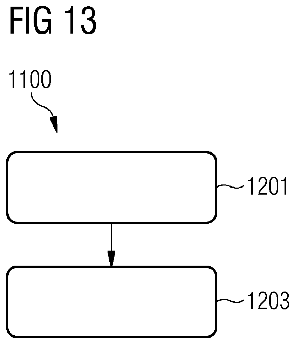

In Fig. 13, a method 1200 is shown. The method comprising an alignment step 1201 for aligning rear end beams with a main foundation in a connection area, and a connection step 1203 for connecting each the rear end beams with the main foundation in the connection area by a single connection arrangement.

**Claims**

1. A support structure (300) for a nacelle (1101) of a wind turbine (1100), wherein the support structure (300) comprises a main foundation (305, 805) and a rear frame comprising at least two rear end beams (301, 303, 500) that are connected to the main foundation (305, 805) at one end and extend from the main foundation (305, 805), wherein the main foundation (305, 805) and each of the at least two rear end beams (301, 303, 500) are connected in a connection area (309, 313, 801) by a single connection arrangement (307, 311, 511, 800, 900, 1000), wherein the connection arrangement (307, 311, 511, 800, 900, 1000) comprises at least one curved section, such that a load on the connection area (309, 313, 801) is distributed within the connection arrangement (307, 311, 511, 800, 900, 1000).

2. The support structure (300) according to claim 1, wherein the connection arrangement (307, 311, 511, 800, 900, 1000) comprises a number of connection elements (1005), wherein the connections elements (1005) are selected from bolts, welds, cylindrical pins, rivets or a combination of these.

3. The support structure (300) according to claim 1 or 2, wherein the connection arrangement (307, 311, 511, 800, 900, 1000) comprises a plurality of connection elements (1005), and wherein connection elements (1005) in a first section (1001) of the connection arrangement (307, 311, 511, 800, 900, 1000) are located closer to each other than connections elements (1005) in a second section (1003) of the connection arrangement (307, 311, 511, 800, 900, 1000).

4. The support structure (300) according to any of the previous claims, wherein the connection arrangement (307, 311, 511, 800, 900, 1000) has a shape that is at least partially oval or circular.

5. The support structure (300) according to any of the previous claims, wherein the connection arrangement (307, 311, 511, 800, 900, 1000) extends in a longitudinal direction of the rear frame.

6. The support structure (300) according to any of the previous claims, wherein each of the rear end beams (301, 303, 500) comprises one or more J-shaped layers (501, 503).

7. The support structure (300) according to claim 6, wherein in case each of the rear end beams (301, 303, 500) comprises at least two J-shaped layers (501, 503), flanges that are to be loaded by compressive loads of the at least two J-shaped layers (501, 503), at least partially, have larger cross section areas than flanges of the at least two J-shaped layers (501, 503) that are to be loaded by tension loads.

8. The support structure (300) according to claim 7, wherein in the connection area (309, 313, 801) at least one reinforcement element is arranged that covers at least one section of the connection area (309, 313, 801).

9. A wind turbine (1100) with a support structure (300) according to any of claim 1 to 8.

10. A method (1200) for connecting a rear frame to a main foundation (305, 805) in a support structure (300) according to any of claims 1 to 8, wherein the rear frame comprises at least two rear end beams (301, 303, 500), the method comprising the steps of:

    - aligning (1201) each of the rear end beams (301, 303, 500) with the main foundation (305, 805) in a connection area (309, 313, 801),
    - connecting (1203) each of the rear end beams (301, 303, 500) with the main foundation (305, 805) in the connection area (309, 313, 801) by a single connection arrangement (307, 311, 511, 800, 900, 1000), wherein the connection arrangement (307, 311, 511, 800, 900, 1000) comprises at least one curved section, such that a load on the connection area is distributed within the connection arrangement (307, 311, 511, 800, 900, 1000).

## FIG 1 PRIOR ART

## FIG 2 PRIOR ART

FIG 3

FIG 4

## FIG 5

## FIG 6

FIG 7

500

515

511

509

501

503

513

FIG 8

509

503

## FIG 9

800
801
803
805

## FIG 10

900
803
805

## FIG 11

## FIG 12

FIG 13

1100

1201

1203

Europäisches
Patentamt

European
Patent Office

Office européen
des brevets

# EUROPEAN SEARCH REPORT

Application Number

EP 19 19 5917

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/096008 A1 (ECOTECNIA S COOP C L [ES]; VILADOMIU I GUARRO PERE [ES] ET AL.) 30 August 2007 (2007-08-30) * abstract * * page 5, line 25 - line 34; figure 1 * ----- | 1-10 | INV. F03D13/20 F03D80/00 |
| X | DE 10 2011 007836 B3 (REPOWER SYSTEMS SE [DE]) 4 October 2012 (2012-10-04) * abstract * * paragraph [0037] * * paragraph [0043] - paragraph [0051]; figures 2,3,4,5 * ----- | 1-4,6-10 | |
| X | WO 2019/038709 A1 (SUZLON ENERGY LTD [IN]) 28 February 2019 (2019-02-28) * abstract * * page 13, paragraph 2 - page 17, paragraph 2; figures 2,3,4,5, * ----- | 1-3,9,10 | |
| A | US 2011/047899 A1 (NUMAJIRI TOMOHIRO [JP]) 3 March 2011 (2011-03-03) * abstract * * paragraph [0040] - paragraph [0054]; figures 1,2,4,5 * ----- | 1-10 | TECHNICAL FIELDS SEARCHED (IPC) F03D |

The present search report has been drawn up for all claims

| Place of search | Date of completion of the search | Examiner |
|---|---|---|
| The Hague | 6 March 2020 | Westermayer, Philipp |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 19 5917

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2020

| Patent document cited in search report | Publication date | Patent family member(s) | Publication date |
|---|---|---|---|
| WO 2007096008 A1 | 30-08-2007 | AU 2006338693 A1<br>CA 2640613 A1<br>CN 101389855 A<br>EP 1991775 A1<br>ES 2488065 T3<br>JP 5057344 B2<br>JP 2009528470 A<br>US 2007200103 A1<br>WO 2007096008 A1 | 30-08-2007<br>30-08-2007<br>18-03-2009<br>19-11-2008<br>25-08-2014<br>24-10-2012<br>06-08-2009<br>30-08-2007<br>30-08-2007 |
| DE 102011007836 B3 | 04-10-2012 | DE 102011007836 B3<br>DK 2699799 T3<br>EP 2699799 A1<br>ES 2534901 T3<br>WO 2012143099 A1 | 04-10-2012<br>23-03-2015<br>26-02-2014<br>29-04-2015<br>26-10-2012 |
| WO 2019038709 A1 | 28-02-2019 | NONE | |
| US 2011047899 A1 | 03-03-2011 | AU 2008331344 A1<br>CA 2674905 A1<br>CN 101687266 A<br>EP 2319648 A1<br>JP 5204107 B2<br>JP WO2009150728 A1<br>KR 20100029065 A<br>KR 20120043134 A<br>US 2011047899 A1<br>WO 2009150728 A1 | 07-01-2010<br>11-12-2009<br>31-03-2010<br>11-05-2011<br>05-06-2013<br>04-11-2011<br>15-03-2010<br>03-05-2012<br>03-03-2011<br>17-12-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2494198 B1